Europäisches Patentamt

European Patent Office

Office européen des brevets

(19)

(11) **EP 0 818 841 B1**

(12) **FASCICULE DE BREVET EUROPEEN**

(45) Date de publication et mention
de la délivrance du brevet:
**12.06.2002 Bulletin 2002/24**

(51) Int Cl.7: **H01M 8/10**, H01M 10/34,
H01M 6/18, C08J 5/22,
H01G 9/02

(21) Numéro de dépôt: **97401613.1**

(22) Date de dépôt: **07.07.1997**

(54) **Matériau à conduction protonique, son utilisation pour l'élaboration d'une membrane à conduction protonique pour les piles à combustible et les supercapacités**

Protonenleitendes Material, ihre Anwendung zur Herstellung von einer protonenleitenden Membran für Brennstoffzellen und Superkondensatoren

Protonically conducting material, its use for manufacturing a protonically conducting membrane for fuel cells and supercapacitors

(84) Etats contractants désignés:
**BE CH DE ES FR GB IT LI PT**

(30) Priorité: **09.07.1996 FR 9608503**

(43) Date de publication de la demande:
**14.01.1998 Bulletin 1998/03**

(73) Titulaires:
- **AUTOMOBILES PEUGEOT**
  **75116 Paris (FR)**
- **AUTOMOBILES CITROEN**
  **92200 Neuilly-sur-Seine (FR)**
- **RENAULT**
  **92109 Boulogne-Billancourt (FR)**

(72) Inventeurs:
- **Poinsignon, Christiane**
  **38100 Grenoble (FR)**
- **Vitter, Gérard**
  **38800 Saint-Martin D'Heres (FR)**
- **Sanchez, Jean-Yves**
  **F-38330 Saint-Ismiez (FR)**
- **Baradie, Bilal**
  **Case Postale 1020, Varennes J3X 1S2 (CA)**
- **Piffard, Yves**
  **44240 La Chapelle Sur Erdre (FR)**
- **Denoyelle, Alain**
  **38100 Grenoble (FR)**

(74) Mandataire: **Sueur, Yvette et al**
**Cabinet SUEUR & L'HELGOUALCH,**
**109, boulevard Haussmann**
**75008 Paris (FR)**

(56) Documents cités:
EP-A- 0 156 241    EP-A- 0 206 969
EP-A- 0 379 372    WO-A-96/29752
DE-A- 2 604 085    DE-A- 3 210 096
US-A- 3 266 940    US-A- 5 136 474

- SCHUTZ P ET AL: "MATERIALS FOR MEDIUM TEMPERATURE SOLID STATE FUEL CELLS" EXTENDED ABSTRACTS FALL MEETING, HONOLULU, HAWAII OCTOBER 18-23, vol. 87, no. 2, 18 octobre 1987, pages 248-249, XP000115049
- CHEMICAL ABSTRACTS, vol. 118, no. 2, 11 janvier 1993 Columbus, Ohio, US; abstract no. 9408, SUZUKI, NOBUKAZU ET AL: "Solid-electrolyte fuel cells" XP000377041 & JP 04 218 267 A (TOSHIBA CORP., JAPAN)
- CHEMICAL ABSTRACTS, vol. 90, no. 14, 2 avril 1979 Columbus, Ohio, US; abstract no. 105217, SATA, TOSHIKATSU ET AL: "Ion exchanger" XP002010753 & JP 53 123 390 A (TOKUYAMA SODA CO., LTD., JAPAN)
- PATENT ABSTRACTS OF JAPAN vol. 010, no. 147 (P-460), 29 mai 1986 & JP 60 263923 A (TOSHIBA KK), 27 décembre 1985,

- **DATABASE WPI Section Ch, Week 8631 Derwent Publications Ltd., London, GB; Class A85, AN 86-200869 XP002028843 & JP 61 132 933 A (TOKUYAMA SODA KK) , 20 juin 1986**
- **PATENT ABSTRACTS OF JAPAN vol. 016, no. 358 (C-0970), 4 août 1992 & JP 04 110352 A (SEKISUI CHEM CO LTD), 10 avril 1992,**
- **S. DENIARD-COURANT ET ALL: "RELATIVE HUMIDITY INFLUENCE ON THE WATER CONTENT AND ON THE PROTONIC CONDUCTIVITY OF THE PHOSPHATOANTIMONIC ACIDS $H_nSb_nP_2O_{3n+5}, xH_2O$ (n=1, 3, 5)" SOLID STATE IONICS, vol. 27, no. 3, juillet 1988, AMSTERDAM NL, pages 189-194, XP002028842**

## Description

La présente invention concerne un matériau conducteur protonique, son utilisation pour l'élaboration d'une membrane échangeuse de protons, ainsi qu'une pile à combustible ou une supercapacité contenant ladite membrane.

Le fonctionnement d'une pile à combustible est fondé sur la transformation directe de l'énergie chimique d'une réaction en énergie électrique. Une oxydation électrochimique de l'hydrogène a lieu à l'anode de la pile, tandis qu'une réduction de l'oxygène se produit à la cathode. L'hydrogène et l'oxygène sont introduits en continu dans la pile soit sous leur forme naturelle, soit sous forme de différents combustibles riches en hydrogène (gaz naturel, méthanol, propane, ...) et en oxygène (air). Les électrodes (par exemple en charbon) sont revêtues de catalyseurs qui sont nécessaires aux réactions.

Les piles à combustible à membrane échangeuse de protons constituent une catégorie particulière de piles à combustibles. Une pile à combustible à membrane échangeuse de protons est une pile hydrogène/air ou méthanol/air dont l'électrolyte est un solide conducteur protonique. L'intérêt principal des piles à combustible à membrane échangeuse de protons réside dans le fait qu'elles peuvent être assemblées simplement. Deux électrodes catalytiques sont pressées sur la membrane échangeuse de protons. Les cellules obtenues ont une épaisseur de l'ordre de 0,3 à 0,5 cm. Il est connu d'utiliser, comme solide conducteur protonique, un composé minéral choisi par exemple parmi Zr $(HPO_4)_2$, $SnHPO_4$, la mordénite d'étain, ou un composé organo-minéral, par exemple l'ormolyte. L'utilisation de ce type de matériau pose cependant des problèmes : soit les membranes sont préparées par simple compactage, et elles ont une tenue mécanique médiocre ; soit il est nécessaire d'utiliser un liant polymère. Il est également connu d'utiliser, pour l'élaboration de la membrane échangeuse de protons d'une pile à combustible, un polymère à squelette perfluoré porteur de chaînes ionophores perfluorosulfonées et qui a une capacité d'échange comprise entre 0,9 et 1,3 protons/ kg. De tels polymères sont commercialisés par exemple sous la dénomination NAFION® par la société Du Pont de Nemours ou sous la dénomination ACIPLEX-S par la société Asahi Chemical. Il est également connu d'utiliser des polyphénylènes sulfonés. Ces membranes sont particulièrement intéressantes car elles possèdent une grande résistance mécanique et une grande stabilité chimique, même au contact d'agents agressifs, et leur conductivité à température ambiante est bonne. Toutefois, le coût élevé de ces membranes constitue un inconvénient majeur.

JP-A-53123390 décrit des membranes échangeuses de cations comprenant des particules de phosphate de Zr de 10 μm et un copolymère de tétrafluoroéthylène et de chlorure de perfluoro(3,6-dioxa-4-méthyl-7-octènesulfonyle), utiles pour la dialyse.

Le but de la présente invention est de fournir un nouveau matériau à conduction protonique, utilisable pour l'élaboration d'une membrane échangeuse de protons qui présente les avantages des membranes de l'art antérieur, mais qui est économiquement plus intéressante.

Un autre objet de l'invention est une membrane échangeuse de protons comprenant un tel matériau, ainsi que l'utilisation de cette membrane dans une pile à combustible ou dans une supercapacité.

Le matériau à conduction protonique selon l'invention est constitué par un composé minéral dispersé dans une matrice polymère, et il est caractérisé en ce que :

- le composé minéral est choisi parmi les acides phosphatoantimoniques, $H_3Sb_3P_2O_{14}$,$xH_2O$, $HSb(PO_4)_2$,$xH_2O$ et la laponite et ;
- la matrice polymère est choisie parmi lespolyélectrolytes et les ionomères qui présentent des propriétés mécaniques permettant l'élaboration d'un film mince ayant une épaisseur inférieure ou égale à 150 μm imperméable aux gaz $H_2$ et $O_2$ et qui est stable en température au moins jusqu'à 150°C en milieu acide, et stable électrochimiquement et mécaniquement.

Le matériau selon l'invention contient de préférence de 2 à 50% en poids de composé minéral par rapport au poids total, de préférence de 3 à 30%.

La matrice polymère est de préférence choisie parmi les polyélectrolytes et les ionomères qui ont une masse moléculaire élevée, plus particulièrement supérieure à 10 000, formant une matrice unidimensionnelle ou tridimensionnelle.

A titre d'exemple, on peut citer les ionomères qui sont constitués par un squelette carboné et qui portent des fonctions ionophores. Ces ionomères peuvent être choisis parmi les polysulfones, les polyaryléthercétones, les polyimides, les polybenzimidazoles et les polycarbonates portant des fonctions ionophores. Les fonctions ionophores sont de préférence des groupes sulfoniques, des groupes phosphoniques ou des groupes carboxyliques.

On peut également citer les polymères qui sont constitués par un squelette carboné fluoré ou perfluoré et qui portent des fonctions ionophores. Les fonctions ionophores sont de préférence des groupes sulfoniques, des groupes phosphoniques ou des groupes carboxyliques. Parmi les polymères ayant une matrice fluorée ou perfluorée, on citera plus particulièrement les ionomères du type NAFION® précités ou des ionomères constitués par une chaîne fluorocarbonée portant des groupes carboxyliques commercialisés par exemple sous la dénomination FLEMION® par la société Asahi Glass.

Les polymères du type polysulfone portant des groupes sulfoniques sont particulièrement préférés. Ces polymères particuliers peuvent être préparés par action d'un agent de sulfonation sur une polysulfone. Comme agent de sulfonation, on peut citer à titre d'exemple le chlorosulfonate de triméthylsilyle (TMSCS) ou ClSO$_3$H. Le TMSCS est un agent de sulfonation particulièrement préféré, dans la mesure où, contrairement aux autres agents de sulfonation, il permet d'obtenir des taux de sulfonation relativement élevés sans dégrader le polymère. Un procédé de sulfonation d'une polysulfone consiste à faire réagir une polysulfone préalablement séchée sous vide avec le chlorosulfonate de triméthylsilyle, dans un solvant anhydre, la réaction étant effectuée à l'abri de l'humidité pendant une durée comprise entre 15 et 20 heures, à une température comprise entre 18°C et 25°C, le rapport en poids TMSCS/polysulfone étant compris entre 0,9 et 3. Comme solvant préféré, on peut citer les solvants chlorés, tels que par exemple le dichlorométhane ou le dichloroéthane. L'utilisation de TMSCS comme agent de sulfonation présente de nombreux avantages. La solution de polymère reste homogène tout au long de la réaction de sulfonation. La distribution des fonctions SO$_3$H dans le polymère est uniforme, comme en attestent les résultats de mesure par RMN H[1]. Le polymère ne subit pas de dégradation chimique des chaînes. La sulfonation permet d'obtenir des polysulfones sulfonées ayant une forte masse molaire, qui confère de bonnes propriétés mécaniques aux membranes qui en sont constituées.

Les polysulfones sulfonées peuvent être préparées à partir des polysulfones du commerce, parmi lesquelles on peut citer les bisphénol A polysulfones commercialisées sous la dénomination UDEL par la société Amoco ; les polyéther sulfones commercialisées sous la dénomination VICTREX par la société ICI America ; les polyaryléther sulfones et les polyphénylsulfones commercialisées par la société Amoco respectivement sous les dénomination RADEL A et RADEL R.

L'acide phosphatoantimonique a une structure lamellaire formée par des couches d'octaèdres de SbO$_6$ entourés de tétraèdres de PO$_4$. Il s'agit d'un hydrate de réseau pour lequel le gonflement en eau avec l'humidité relative suit une variation précise et reproductible, correspondant au remplissage progressif de l'espace inter-lamellaire par une, puis deux couches d'eau, l'humidité relative croissant jusqu'à 100%.

La laponite est un silicate lamellaire de synthèse, formé par l'empilement de deux couches de tétraèdres de SiO$_4$ enserrant une couche compacte d'octaèdres de type brucite Mg(OH)$_2$. La laponite peut être préparée par une synthèse sèche de la manière suivante. On porte un mélange xNa$_{0,4}$MgO, 8SiO$_2$ (x=3 ou 4) à 1300°C dans un four et on le maintient à cette température pendant 1 heure à l'air dans un creuset de graphite ou sous atmosphère neutre ou réductrice en creuset de platine. Ensuite, on sort le produit résultant du four et on le laisse refroidir à température ambiante. L'analyse cristallographique à travers l'évolution des raies (001) au contact de l'humidité ambiante montre que le minéral obtenu est une argile gonflante. L'analyse chimique du produit obtenu correspond au matériau souhaité, à savoir Na$^+_{1,10}$[(Mg$^{2+}_{5,1}$Na$^+_{0,70}$ - $\square_{0,20}$)$^{VI}$(Si$_8^{4+}$)$^{IV}$O$^{2-}_{20}$OH$^-_4$].

Une membrane à conduction protonique selon l'invention peut être préparée par un procédé comprenant les étapes suivantes :

- préparation d'une solution de la matrice polymère dans un solvant approprié ;
- dispersion du composé minéral dans la solution ;
- homogénéisation de la dispersion par une agitation vigoureuse ;
- dégazage de la dispersion homogène ;
- coulage de la dispersion à l'intérieur d'un anneau posé sur une plaque en Téflon® ;
- évaporation du solvant jusqu'à obtention d'une membrane auto-supportée ;
- immersion de la membrane auto-supportée dans l'eau pour remplacer le solvant résiduel par de l'eau.

Une membrane selon l'invention est constituée par le matériau à conduction protonique selon l'invention constitué par un composé minéral dispersé dans une matrice polymère, ledit matériau étant gonflé par de l'eau. De préférence, la membrane contient au moins 10% en poids d'eau.

Une pile à combustible selon la présente invention comprend deux électrodes catalytiques pressées sur la membrane échangeuse de protons selon la présente invention. Les électrodes peuvent être un tissu de graphite imprégné par un catalyseur, par exemple par du platine finement dispersé.

Une pile à combustible selon l'invention est particulièrement utile comme source d'énergie pour la traction électrique, en particulier pour les véhicules électriques de transport en commun. Elle peut également être utilisée dans des véhicules électriques hybrides munis de batteries.

Une membrane échangeuse de protons selon l'invention peut également être utilisée dans une supercapacité. Une supercapacité selon l'invention est constituée par une membrane selon l'invention, placée entre deux électrodes de feutre de carbone.

L'invention est décrite plus en détail dans les exemples ci-après. Les exemples sont donnés pour illustrer l'invention, mais ne présentent aucun caractère limitatif.

**EXEMPLE 1**

**Préparation des polysulfones sulfonées**

a)Préparation d'une polysulfone sulfonée

Plusieurs échantillons de polysulfone sulfonée, désignés ci-après par PSS, ont été préparés à partir d'une bis-phénol-A-polysulfone commercialisée sous la dénomination UDEL-P1700 par la société Amoco et d'un agent de sulfonation (TMSCS ou ClSO$_3$H).

On a préparé une solution de bis-phénol-A-polysulfone et d'agent de sulfonation en boîte à gants pour éviter toute dégradation par l'humidité atmosphérique, en dissolvant le polymère, préalablement séché sous vide à 80°C pendant 24 heures, dans du dichlorométhane anhydre. Ensuite, on a introduit dans un ballon tricol muni d'une ampoule à brome et d'un réfrigérant, successivement ladite solution de polymère et l'agent de sulfonation en solution dans le dichlorométhane anhydre. La quantité d'agent de sulfonation a été calculée en fonction du taux de sulfonation souhaité, sachant que la réaction n'est pas quantitative. L'agent de sulfonation a été ajouté goutte à goutte en 10 minutes et la réaction a été effectuée sous balayage d'argon. Le milieu réactionnel a ensuite été maintenu sous agitation magnétique à température ambiante pendant environ 20 heures sous une très légère surpression d'argon. Pendant ce maintien sous agitation, on a effectué un balayage d'argon d'une dizaine de minutes toutes les 5 heures environ, de manière à éliminer suffisamment l'acide chlorhydrique formé tout en évitant d'entraîner le solvant.

Après 20 heures de réaction, on a ajouté lentement par l'ampoule à brome, un excès d'une solution à 25% de méthoxyde de sodium dans le méthanol. Le polymère a alors précipité sous forme de sulfonate de sodium désigné ci-après par PSSNa. On a rincé le précipité plusieurs fois au méthanol, puis à l'eau distillée. On a régénéré l'acide en dissolvant le PSSNa dans la diméthylformamide (DMF) à une concentration de 20 g/l, avant de traiter par une solution aqueuse de HCl 0,5N dans laquelle la polysulfone sulfonée PSS précipite.

Les résultats obtenus en fonction de la quantité de bis-phénol-A-polysulfone et en fonction de la quantité et de la nature de l'agent de sulfonation sont indiqués dans le tableau 1 ci-dessous. La capacité d'échange de chaque échantillon de polysulfone sulfonée a été déterminée en calculant une valeur moyenne de la teneur en groupes sulfoniques à partir de l'analyse élémentaire et de l'analyse RMN H[1]. Les PSS obtenues à l'aide de TMSCS sont désignées par PSS-1, PSS-2 et PSS-5 ; les PSS obtenues à l'aide de ClSO$_3$H sont désignées par PSS-3 et PSS-4.

b) Comparaison entre une polysulfone sulfonée à l'aide de TMSCS et d'une polysulfone sulfonée à l'aide de ClSO$_3$H

Le degré de dégradation chimique de la polysulfone PSS-1 a été comparé avec celui de la polysulfone PSS-4 obtenue dans les mêmes conditions, en remplaçant le TMSCS par ClSO$_3$H et ayant un taux de sulfonation voisin. La comparaison a été effectuée par viscosimétrie à capillaire dans un tube d'Ubbelohde, à 25°C, sur les formes sodiques (PSSNa) des deux polysulfones. La mesure a été effectuée en utilisant comme solvant une solution à 10$^{-1}$ M/ litre de NaI dans la DMF. La viscosité intrinsèque obtenue {μ} est de 0,42 dl/g et de 0,19 dl/g pour les échantillons préparés respectivement à partir de TMSCS et de ClSO$_3$H. Les taux de sulfonation étant très proches, la différence de viscosité intrinsèque {μ}, et donc de masse viscosimétrique $\overline{M}$v ne peuvent par conséquent être attribuées qu'à une dégradation chimique dans PSS-4, se traduisant par des coupures de chaînes macromoléculaires lorsque ClSO$_3$H est utilisé comme agent de sulfonation.

TABLEAU 1

| PSS N° | UDEL-P1700 (g) | Agents de sulfonation (g) | taux de sulfonation (mole de proton / kg) | Viscosité (dl/g) |
|---|---|---|---|---|
| PSS-1 | 50 | 29,86 (TMSCS) | 0,9 | 0,42 |
| PSS-2 | 20 | 24,57 (TMSCS) | 1,6 | 0,45 |
| PSS-3 | 177 | 65,2 (ClSO$_3$H) | 1,3 | 0,3 |
| PSS-4 | 177 | 56 (ClSO$_3$H) | 1,1 | 0,19 |
| PSS-5 | 50 | 49 (TMSCS) | 1,4 | |

## EXEMPLE 2

### Préparation de membranes

Dans une solution de 0,73 g de polysulfone sulfonée PSS-4 à 1,1 H$^+$/kg dans 10 ml d'un mélange 1/4 isopropanol / 1,2-dichloroéthane, on a dispersé 0,056 g de $H_3Sb_3P_2O_{14}$, $6H_2O$ (désigné ci-après par H3). On a agité vigoureusement pendant 20 heures la suspension ainsi obtenue, contenant 7,1 % en poids de H3, puis on l'a dégazée sous un vide d'environ 25 mm Hg ($\approx$ 3300 Pa) jusqu'à disparition totale des bulles. On l'a ensuite coulée à l'intérieur d'un anneau en Plexiglass® de 8 cm de diamètre collé sur une plaque en Téflon®. On a évaporé le solvant par séchage en étuve ventilée à 30°C pendant 4 heures. Avant évaporation totale du solvant, on a trempé la membrane dans l'eau. Dans cette membrane encore gonflée par le mélange de solvants, l'eau s'est substituée progressivement au solvant, ce qui a permis d'atteindre un taux de gonflement de l'ordre de 100%.

La membrane ainsi obtenue (désignée ci-après par Ma-1) présente une homogénéité de gonflement et atteint une épaisseur de 140 $\mu$m.

La température de transition vitreuse Tg, mesurée par calorimétrie différentielle de balayage (DSC) est de 204°C pour la forme acide (PSS) et de 267°C pour la forme sel de sodium (PSSNa).

Différentes membranes ont été préparées de la même manière que ci-dessus :

- avec PSS-4 en faisant varier la quantité de H3 (membranes Ma-2 et Ma-3) ;
- avec PSS-4 sans H3 (membrane Ma'-1). La conductivité dépend uniquement des fonctions sulfoniques ;
- avec PSS-3 en faisant varier la quantité de H3 (membranes Mb-1 et Mb-2).
- avec la polysulfone non sulfonée UDEL-P1700 (membranes désignées ci-après par M"-1, M"-2, M"-3).

On a également préparé des membranes, de la même manière que ci-dessus, à partir d'un mélange obtenu en mélangeant une dispersion de 7% en poids de H3 dans un glyme, le monoéthyl éther de diéthylène glycol, et une solution de 0,9 g de la polysulfone sulfonée PSS-5 dans le glyme. La présence simultanée dans le solvant d'une fonction alcool et de fonctions éther à fort caractère donneur permet une très bonne dissolution du PSS. On a homogénéisé la dispersion ainsi obtenue et on l'a mise sous une dépression de 70 mm de Hg ($\approx$ 9000 Pa) jusqu'à disparition totale des bulles. On a éliminé le solvant jusqu'à obtention d'une membrane auto-portée, qui a ensuite été trempée dans plusieurs bains d'eau successifs pour éliminer le glyme et le remplacer par l'eau.

Les membranes finalement obtenues, désignées ci-après par Mc-1 et Mc'-1, qui contiennent respectivement 12% et 0% en poids de H3, portent 1,4 protons/kg.

L'épaisseur des différentes membranes variait entre 140 et 160 $\mu$m.

Un essai de traction a été effectué à température ambiante à l'aide d'un appareil Minimat fourni par la société Polymer Laboratory sur un échantillon obtenu en découpant dans la membrane une éprouvette de 0,5 cm x 0,5 cm. On a mesuré un allongement à la rupture de 5,4% et un module d'Young de 88 Mpa à 22°C.

TABLEAU 2

| Membrane n° | teneur en H3 (% en poids) | Polymère | allongement à la rupture (%) | module d'Young à 22°C (MPa) |
|---|---|---|---|---|
| Ma-1 | 7,1 | PSS-4 | 5,4 | 88 |
| Ma-2 | 3,5 | PSS-4) | 6,4 | 158 |
| Ma-3 | 12 | PSS-4 | 1,9 | 59 |
| Ma'-1 | 0 | PSS-4 | 3,6 | 495 |
| M"-1 | 3 | UDEL-P1700 | 48 | 370 |
| M"-2 | 0 | UDEL-P1700 | 44 | 392 |
| M"-3 | 25 | UDEL-P1700 | 60 | 340 |
| Mb-1 | 7,1 | PSS-3 | | |
| Mb-2 | 3,5 | PSS-3 | | |
| Mc'-1 | 0 | PSS-5 | | |
| Mc-1 | 12 | PSS-5 | | |

## EXEMPLE 3

### Détermination de la conductivité de divers échantillons

A partir de chacune des membranes Ma-1 à Ma-3, Ma'-1, M''-1 à M''-3, Mb-1 à Mb-2, Mc'-1, Mc-1, on a préparé un échantillon en découpant dans la membrane une éprouvette de 0,5 cm x 0,5 cm et on a effectué une mesure de la conductivité ionique σ à 80°C et à 100% d'humidité relative dans une cellule de mesure permettant de contrôler le taux d'humidité. Les résultats sont indiqués dans le tableau 4 ci-dessous.

TABLEAU 4

| membrane n° | σ (S.cm$^{-1}$) à 80°C |
|---|---|
| Ma-1 | $2.10^{-2}$ |
| Ma-2 | $1,27.10^{-2}$ |
| Ma-3 | $1,60.10^{-2}$ |
| Ma'-1 | $4.10^{-4}$ |
| M''-1 | isolant |
| M''-2 | isolant |
| M''-3 | $9.10^{-4}$ |
| Mb-1 | $3,5.10^{-2}$ |
| Mb-2 | $2,5.10^{-2}$ |
| Mc'-1 | $2,5.10^{-2}$ |
| Mc-1 | $5.10^{-2}$ |

Parmi les membranes Ma-1 à Ma-3, on note que la conductivité maximale est obtenue pour une teneur en H3 de l'ordre de 7% en poids.

La comparaison des différentes membranes Ma et des membranes Ma' ou M'' montre bien la synergie entre les charges H3 et les groupes sulfoniques en ce qui concerne la conductivité protonique.

La conductivité des membranes selon l'invention du type Mb est légèrement supérieure à celle des membranes selon l'invention du type Ma. Elle est très nettement supérieure à celle de membranes analogues non chargées en H3.

## EXEMPLE 4

### Pile à combustible

Une membrane Ma-1 préparée selon l'exemple 2 ayant une épaisseur de 120 μm contenant 7,1% en poids de H3 et ayant une capacité de 1,2 groupes $SO_3$ par kg a été utilisée dans une pile à combustible. La membrane a été placée dans une cellule de pile ayant une surface de 20 cm$^2$, munie d'électrodes E.Tek© chargées à 0,35 mg de platine par cm$^2$. L'essai a été effectué à une température de 70°C sous une pression $P_{H_2} = P_{O_2} = 4$ bars.

On a mesuré la tension E de la cellule (V) en fonction de l'intensité I du courant débité par la cellule (A.cm$^{-2}$). La comparaison avec la variation de la tension en fonction du courant débité obtenue dans une cellule similaire avec une membrane de l'art antérieur du type Nafion®, montre que les performances de la membrane selon l'invention représentent environ 80% de celles de l'art antérieur. Ce résultat est en accord avec la valeur de conductivité de le membrane Ma-1 donnée dans le tableau 4 ($2.10^{-2}$ S.cm$^{-1}$ à 80°C). Les membranes Mc-1 ont une conductivité équivalente à celle des membranes en Nafion ($5.10^{-2}$ S.cm$^{-1}$). Les membranes de l'invention présentent toutefois un avantage important par rapport aux membranes du type Nafion®, en ce sens qu'elles sont nettement plus économiques en raison de leur coût de fabrication plus faible.

## Revendications

1.  Matériau à conduction protonique constitué par un composé minéral dispersé dans une matrice polymère, **carac-**

**térisé en ce que** :

- le composé minéral est choisi parmi les acides phosphatoantimoniques, $H_3Sb_3P_2O_{14}$, $xH_2O$, HSb $(PO_4)_2$, $xH_2O$ et la laponite ;

- la matrice polymère est choisie parmi les polyélectrolytes et les ionomères qui présentent des propriétés mécaniques permettant l'élaboration d'un film mince ayant une épaisseur inférieure ou égale à 150 µm imperméable aux gaz $H_2$ et $O_2$ et qui est stable en température au moins jusqu'à 150°C en milieu acide, et stable électrochimiquement et mécaniquement.

2. Matériau selon la revendication 1, **caractérisé en ce que** la matrice polymère est choisie parmi les polyélectrolytes et les ionomères qui ont une masse moléculaire élevée, plus particulièrement supérieure à 10 000, formant une matrice unidimensionnelle ou tridimensionnelle.

3. Matériau selon la revendication 1, **caractérisé en ce que** la matrice polymère est un ionomère constitué par un squelette carboné portant des fonctions ionophores.

4. Matériau selon la revendication 3, **caractérisé en ce que** l'ionomère est choisi parmi les polysulfones, les polyaryléthercétones, les polyimides, les polybenzimidazoles et les polycarbonates portant des fonctions ionophores.

5. Matériau selon la revendication 3, **caractérisé en ce que** la matrice polymère est choisie parmi les polymères qui sont constitués par un squelette carboné fluoré ou perfluoré portant des fonctions ionophores.

6. Matériau selon l'une des revendications 3 à 5, **caractérisé en ce que** les fonctions ionophores sont des groupes sulfoniques, des groupes phosphoniques ou des groupes carboxyliques.

7. Matériau selon la revendication 1, **caractérisé en ce qu'**il contient de 2 à 50% en poids de composé minéral, par rapport au poids total.

8. Membrane échangeuse de protons, **caractérisée en ce qu'**elle comprend un matériau à conduction protonique selon l'une des revendications 1 à 7, ledit matériau étant gonflé par de l'eau.

9. Membrane selon la revendication 8, **caractérisée en ce que** la teneur en eau est égale à au moins 10% en poids.

10. Pile à combustible comprenant deux électrodes et un électrolyte, **caractérisée en ce que** l'électrolyte est constitué par une membrane échangeuse de protons selon l'une des revendications 8 à 9.

11. Supercapacité constituée par un électrolyte et deux électrodes, **caractérisée en ce que** l'électrolyte est constitué par une membrane échangeuse de protons selon l'une des revendications 8 ou 9.


**Patentansprüche**

1. Protonenleitendes Material, das aus einer in einer Polymermatrix dispergierten mineralischen Verbindung besteht, **dadurch gekennzeichnet, dass**

- die mineralische Verbindung aus Phosphatoantimonsäuren, $H_3Sb_3P_2O_{14}$,$xH_2O$, HSb$(PO_4)_2$,$xH_2O$ und Laponit ausgewählt ist;

- die Polymermatrix aus Polyelektrolyten und Ionomeren ausgewählt ist, die mechanische Eigenschaften aufweisen, welche die Herstellung eines dünnen Films mit einer Dicke $\leq$ 150 µm ermöglichen, der für $H_2$- und $O_2$-Gas undurchlässig ist und der in saurem Medium bis zumindest 150 °C temperaturbeständig ist sowie elektrochemisch und mechanisch beständig ist.

2. Material nach Anspruch 1, **dadurch gekennzeichnet, dass** die Polymermatrix aus Polyelektrolyten und Ionomeren ausgewählt ist, die ein höheres Molekulargewicht, im Speziellen über 10.000, aufweisen, und eine eindimensionale oder dreidimensionale Matrix bilden.

3. Material nach Anspruch 1, **dadurch gekennzeichnet, dass** die Polymermatrix ein Ionomer ist, das aus einem Kohlenstoffskelett besteht, das ionophore Gruppen aufweist.

4. Material nach Anspruch 3, **dadurch gekennzeichnet, dass** das Ionomer aus Polysulfonen, Polyaryletherketonen, Polyimiden, Polybenzimidazolen und Polycarbonaten ausgewählt ist, die ionophore Gruppen aufweisen.

5. Material nach Anspruch 3, **dadurch gekennzeichnet, dass** die Polymermatrix aus Polymeren ausgewählt ist, die aus einem Fluorkohlenstoff- oder Perfluorkohlenstoff-Skelett bestehen, das ionophore Gruppen aufweist.

6. Material nach einem der Ansprüche 3 bis 5, **dadurch gekennzeichnet, dass** die ionophoren Gruppen Sulfonatgruppen, Phosphonatgruppen oder Carboxylgruppen sind.

7. Material nach Anspruch 1, **dadurch gekennzeichnet, dass** es 2 bis 50 Gew.-%, bezogen auf das Gesamtgewicht, an mineralischer Verbindung enthält.

8. Protonenaustauschmembran, **dadurch gekennzeichnet, dass** sie ein Protonenleitendes Material nach einem der Ansprüche 1 bis 7 umfasst, wobei das Material mit Wasser gequollen ist.

9. Membran nach Anspruch 8, **dadurch gekennzeichnet, dass** der Wassergehalt zumindest 10 Gew.-% beträgt.

10. Brennstoffzelle, die zwei Elektroden und einen Elektrolyten umfasst, **dadurch gekennzeichnet, dass** der Elektrolyt aus einer Protonenaustauschmembran nach einem der Ansprüche 8 oder 9 besteht.

11. Superkondensator, der aus einem Elektrolyten und zwei Elektroden besteht, **dadurch gekennzeichnet, dass** der Elektrolyt aus einer Protonenaustauschmembran nach einem der Ansprüche 8 oder 9 besteht.

**Claims**

1. Protonically conductive material consisting of a mineral compound dispersed in a polymer matrix, **characterized in that**:

   - the mineral compound is chosen from phosphatoantimonic acids, $H_3Sb_3P_2O_{14} \cdot xH_2O$, $HSb(PO_4)_2 \cdot xH_2O$ and laponite;
   - the polymer matrix is chosen from polyelectrolytes and ionomers which have mechanical properties allowing the formation of a thin film having a thickness of less than or equal to 150 µm which is impermeable to the gases $H_2$ and $O_2$ and which is temperature-stable up to at least 150°C in acid medium and electrochemically and mechanically stable.

2. Material according to Claim 1, **characterized in that** the polymer matrix is chosen from polyelectrolytes and ionomers which have a high molecular mass, more particularly greater than 10,000, forming a one-dimensional or three-dimensional matrix.

3. Material according to Claim 1, **characterized in that** the polymer matrix is an ionomer consisting of a carbon backbone carrying ionophoric functional groups.

4. Material according to Claim 3, **characterized in that** the ionomer is chosen from polysulphones, polyaryletherketones, polyimides, polybenzimidazoles and polycarbonates carrying ionophoric functional groups.

5. Material according to Claim 3, **characterized in that** the polymer matrix is chosen from polymers which consist of a fluorocarbon or perfluorocarbon backbone carrying ionophoric functional groups.

6. Material according to one of Claims 3 to 5, **characterized in that** the ionophoric functional groups are sulphonic groups, phosphonic groups or carboxylic groups.

7. Material according to Claim 1, **characterized in that** it contains from 2 to 50% by weight of mineral compound with respect to the total weight.

8.   Proton exchange membrane, **characterized in that** it comprises a protonically conductive material according to one of Claims 1 to 7, the said material being swollen with water.

9.   Membrane according to Claim 8, **characterized in that** the water content is equal to at least 10% by weight.

10.  Fuel cell comprising two electrodes and an electrolyte, **characterized in that** the electrolyte consists of a proton exchange membrane according to either of Claims 8 and 9.

11.  Supercapacitor consisting of an electrolyte and two electrodes, **characterized in that** the electrolyte consists of a proton exchange membrane according to either of Claims 8 and 9.